# EUROPEAN PATENT APPLICATION

(11) **EP 4 361 066 A1**
(43) Date of publication of application: **01.05.2024**
(21) Application number: 22203724.4
(22) Date of filing: 26.10.2022
(51) Int. Cl.: B65G 17/08, B65G 17/40, B65G 39/20, B65G 17/06

(54) **CONVEYOR BELT**

(71) Applicant: Logi Concept Engineering B.V., 7156 NW Beltrum (NL)
(72) Inventor: Brinkers, Joep Hendrik, 7152 KV Eibergen (NL)
(74) Representative: 't Jong, Bastiaan Jacob

(57) **Abstract**

The invention relates to a conveyor belt comprising a plurality of adjacent conveyor belt elements and a plurality of rods connecting adjacent conveyor belt elements, wherein each belt element comprises:
- an elongate body having a support surface;
- at least one protrusion arranged on a first side of the elongate body and having a first hole through the at least one protrusion and which hole extends parallel to the longitudinal axis of the elongate body;
- at least one recess arranged on a second side of the elongate body,
- a second hole arranged adjacent to the second side and extending parallel to the longitudinal axis of the elongate body, wherein the axis of the second hole crosses the at least one recess;
wherein the at least one first protrusion interlocks with the at least one recess of an adjacent belt element and a connecting rod extends through the first and second holes of the interlocked at least one first protrusion and the at least one recess;
support rollers arranged adjacent to each locking plate, wherein each support roller is mounted to an elongate body by a mounting axle, such as a bolt or screw, which extends through the locking plate and into the elongate body, wherein the mounting axle is parallel to and offset from the connecting rod of the corresponding elongate element.

## Description

The invention relates to a conveyor belt comprising a plurality of adjacent conveyor belt elements and a plurality of rods connecting adjacent conveyor belt elements, wherein each belt element comprises:
- an elongate body having a support surface;
- at least one protrusion arranged on a first side of the elongate body and having a first hole through the at least one protrusion and which hole extends parallel to the longitudinal axis of the elongate body;
- at least one recess arranged on a second side of the elongate body,
- a second hole arranged adjacent to the second side and extending parallel to the longitudinal axis of the elongate body, wherein the axis of the second hole crosses the at least one recess;
wherein the at least one first protrusion interlocks with the at least one recess of an adjacent belt element and a connecting rod extends through the first and second holes of the interlocked at least one first protrusion and the at least one recess.

Such conveyor belts are widely known and could be used for straight line transport, but also for transport along a curved path. In such a case the hole in the protrusion is widened allowing for subsequent conveyor belt elements to rotate within the plane of transport and therefore allowing for a curved transport path.

Such conveyor belts are also used to transport crates with bottles, such as large soda bottles or large glass beer bottles. These crates only require a small conveyor belt but also require a high strength conveyor belt due to the weight of the crates. The conveyor belt elements typically slide over guide rails, which results in combination with the weight of the crates in a substantial friction. Furthermore, dirt and debris from the crates cause further friction. The substantial friction increases the energy consumption, which is especially undesired for the high costs of energy, but also for the environmental impact.

In known conveyor belts this increased friction, in particular caused by dirt and debris, is reduced by flushing the guide rails with substantial amounts of water to remove any dirt. In addition the water provides a lubricant between the conveyor belt and the guide rails. However, the use of such amounts of water is undesired as it provides a substantial environmental impact.

Friction can also be reduced by providing support rollers at the longitudinal ends of the conveyor belt elements, such as described in EP 3757039. In this conveyor belt, the support rollers are mounted with a mounting axle into the same hole as in which the connecting rod is arranged. This locks the connecting rod in the conveyor belt element. However, the mounting axle of the support roller is positioned in the same plane as the connecting rod, which is typically in the center of the conveyor belt element, such that tension forces can optimally be transferred from one element, via the connecting rod to an adjacent element. This also causes the support rollers to extend both above and below the conveyor belt element, although it is only required for the support roller to extend below the element.

When the support rollers extend also at the top of the conveyor belt element, additional measures need to be taken to prevent the rollers from contacting the goods supported by the conveyor belt.

It is an object of the invention to reduce or even remove the above mentioned disadvantages.

This object is achieved according to the invention with a conveyor belt according to the preamble, which is characterized by support rollers arranged adjacent to each locking plate, wherein each support roller is mounted to an elongate body by a mounting axle, such as a bolt or screw, which extends through the locking plate and into the elongate body, wherein the mounting axle is parallel to and offset from the connecting rod of the corresponding elongate element.

The conveyor belt according to the invention has a substantial lower friction due to the support rollers, while the support rollers do not influence goods on the support surface. Due to the offset of the mounting axles relative to the connecting rods, the thickness of the elongate body can be optimized for the traction forces in the conveyor belt, while the support rollers will only extend on the bottom side of the elongate body.

This substantial lower friction reduces the environmental impact by the reduction in power consumption and by the loss of the requirement for large amounts of flushing water. As a result a dry run conveyor belt is provided with the invention.

A preferred embodiment of the conveyor belt according to the invention further comprises locking plates arranged on both longitudinal ends of each elongate body, which locking plates cover the corresponding second hole to prevent the rod from shifting out of the second hole.

With the invention the locking plate ensures the locking of the connecting rod, while the mounting axle of the support roller is positioned under the connecting rod viewed relative to the support surface. This ensures that the support rollers only extend on the bottom side of the elongate body and not at the top, such that goods on the support surface are not influenced by the support rollers or vice versa.

The use of the locking plates allow for an offset positioning of the mounting axle of a support roller relative to the connecting rod, while the mounting axle still ensures for preventing the connecting rod from shifting out of the elongate body.

In an embodiment of the conveyor belt according to the invention each mounting axle is arranged relative to the corresponding connecting rod and viewed in axial direction of the connecting rod on the opposite side of the support surface. This allows for the support roller to extend at the bottom of the elongate body, while staying below the support surface of the elongate body.

In a preferred embodiment of the conveyor belt according to the invention the elongate bodies comprise flanges arranged on the longitudinal ends and extending over the support rollers.

The flanges increase the support surface and also provide finger protection or finger tightness for personnel present near the conveyor belt.

In still a further embodiment of the conveyor belt according to the invention the locking plates are provided with a positioning protrusion, which positioning protrusion is positioned in one end of the second hole of the elongate body.

The positioning protrusion allows for easy assembly of the conveyor belt, as the protrusion will position the locking plate in the correct position relative to the elongate body, after which the mounting axle with the support roller can be mounted into the elongate body.

Yet a further preferred embodiment of the conveyor belt according to the invention comprises at least one guide roller mounted to the elongate body on the side opposite of the support surface and with the rotation axis of the at least one guide roller perpendicular to the support surface.

Especially for conveyor belts with a curved path, the guide rollers provide for a low friction guidance along the curved path.

These and other features of the invention will be elucidated in conjunction with the accompanying drawings.
Figure 1 shows a perspective view of a conveyor belt according to the invention.
Figure 2 shows a bottom view of two adjacent conveyor belt elements.
Figure 3 shows a front view of a conveyor belt element of the conveyor belt of figure 1.
Figure 4 shows an exploded perspective view of one side of a conveyor belt element.

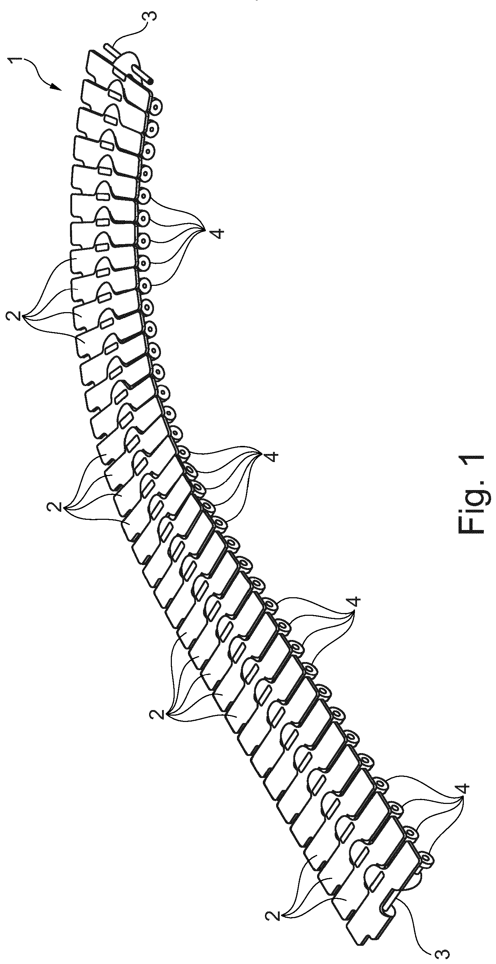

Figure 1 shows a perspective view of a conveyor belt 1 according to the invention. The conveyor belt 1 comprises a plurality of adjacent conveyor belt elements 2, which are interconnected with connecting rods 3. Support rollers 4 are provided on either elongate end of the conveyor belt elements 2. The top support surfaces of all these conveyor belt elements 2 form a transporting surface. The conveyor belt 1 is shown with a curved transport path.

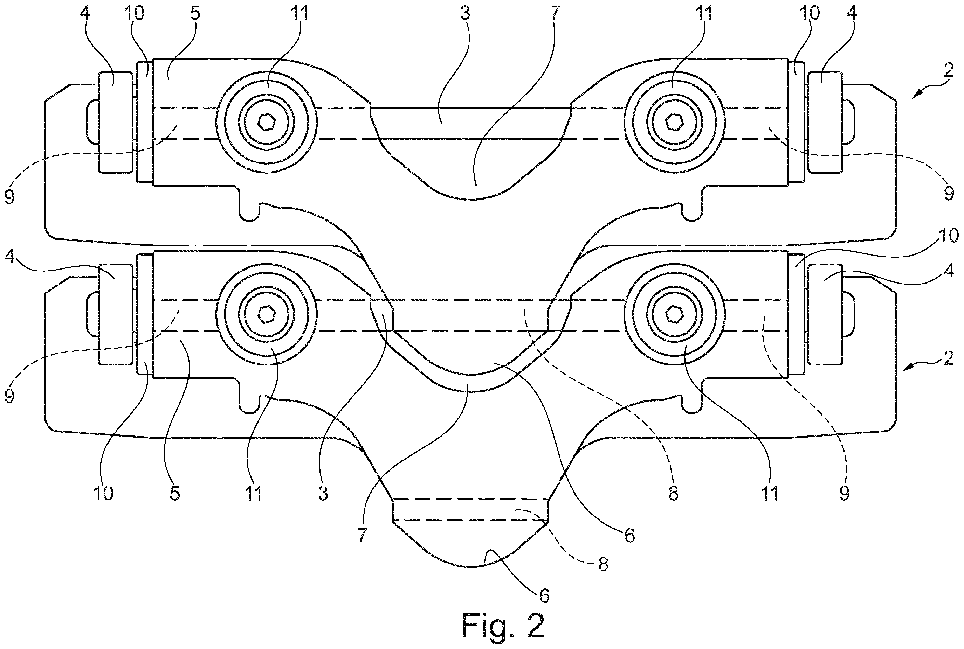

Figure 2 shows two conveyor belt elements 2 with an elongate body 5 having a protrusion 6 on a first side of the elongate body. At the other, second side of the elongate body, a recess 7 is provided in which a protrusion 6 of an adjacent elongate body 5 protrudes.

The protrusion 6 has a first hole 8 through which a connecting rod 3 extends. At the other side of the elongate body 5, a second hole 9 is arranged, through which also the connecting rods 3 extend and interconnects adjacent conveyor belt elements 2.

A locking plate 10 is arranged on either longitudinal end of the elongate body 5 to close the second hole 9 and lock the connecting rod 3 in place.

At the bottom side of the elongate body 5 two guide rollers 11 are provided to guide the conveyor belt along a curved path.

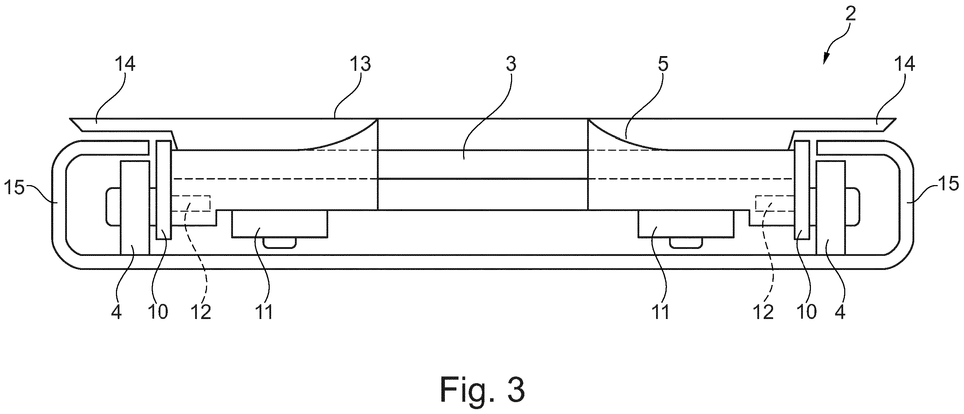

Figure 3 shows a front view of a conveyor belt element 2. The support rollers 4 are mounted by a mounting axle 12, which extends through the locking plates 10. Clearly the mounting axles 12 are parallel to and offset from the connecting rod 3, such that the support rollers 4 extend on the bottom side of the elongate body 5, but are positioned below the support surface 13 of the elongate body 5.

As a result flanges 14 can be provided to extend the support surface 13 and cover the top side of the support rollers 4 to provide finger tightness.

The offset of the mounting axles 12 also allows for a U-shaped guide rail 15 to grasp around the support rollers 4 and prevent flipping of the conveyor belt 1, especially when the conveyor belt 1 follows a curved path.

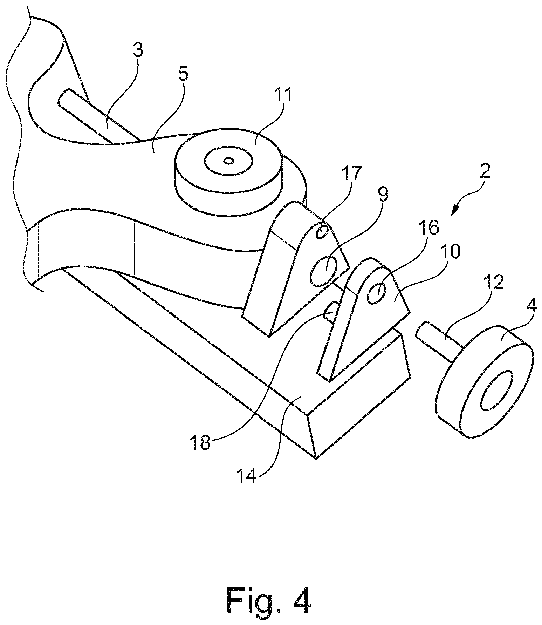

Figure 4 shows an exploded perspective view of an elongate end of the conveyor belt element 2. The locking plate 10 is provided with a hole 16 through which the mounting axle 12 extends and mounts both the locking plate 10 and the support roller 4 into a hole 17 in the elongate element 5.

The locking plate 10 is furthermore provided with a positioning protrusion 18 which is inserted into the second hole 9 and locks the connecting rod 3 inside the elongate body 5.

## Claims

1. Conveyor belt comprising a plurality of adjacent conveyor belt elements and a plurality of rods connecting adjacent conveyor belt elements, wherein each belt element comprises:
- an elongate body having a support surface;
- at least one protrusion arranged on a first side of the elongate body and having a first hole through the at least one protrusion and which hole extends parallel to the longitudinal axis of the elongate body;
- at least one recess arranged on a second side of the elongate body,
- a second hole arranged adjacent to the second side and extending parallel to the longitudinal axis of the elongate body, wherein the axis of the second hole crosses the at least one recess;
wherein the at least one first protrusion interlocks with the at least one recess of an adjacent belt element and a connecting rod extends through the first and second holes of the interlocked at least one first protrusion and the at least one recess
**characterized by**
support rollers arranged adjacent to each locking plate, wherein each support roller is mounted to an elongate body by a mounting axle, such as a bolt or screw, which extends through the locking plate and into the elongate body, wherein the mounting axle is parallel to and offset from the connecting rod of the corresponding elongate element.

2. Conveyor belt according to claim 1, further comprising locking plates arranged on both longitudinal ends of each elongate body, which locking plates cover the corresponding second hole to prevent the rod from shifting out of the second hole.

3. Conveyor belt according to claim 1 or 2, wherein each mounting axle is arranged relative to the corresponding connecting rod and viewed in axial direction of the connecting rod on the opposite side of the support surface.

4. Conveyor belt according to any of the preceding claims, wherein the elongate bodies comprise flanges arranged on the longitudinal ends and extending over the support rollers.

5. Conveyor belt according to any of the preceding claims, wherein the locking plates are provided with a positioning protrusion, which positioning protrusion is positioned in one end of the second hole of the elongate body.

6. Conveyor belt according to any of the preceding claims, further comprising at least one guide roller mounted to the elongate body on the side opposite of the support surface and with the rotation axis of the at least one guide roller perpendicular to the support surface.
